# EUROPÄISCHE PATENTSCHRIFT

(11) **EP 1 859 976 B1**
(45) Veröffentlichungstag und Bekanntmachung des Hinweises auf die Patenterteilung: **25.12.2013**
(21) Anmeldenummer: 06026884.4
(22) Anmeldetag: 27.12.2006
(51) Int. Cl.: B60J 1/20, B60R 21/08, E06B 9/42, B60R 5/04

(54) **Rollo mit geräuschfreiem Spiralfederantrieb**
Roller blind with silent coil spring motor
Volet roulant avec entraînement silencieux par ressort en spirale

(30) Priorität: 23.05.2006 DE 102006024538
(43) Veröffentlichungstag der Anmeldung: 28.11.2007
(73) Patentinhaber: BOS GmbH & Co. KG, 73760 Ostfildern (DE)
(72) Erfinder: Hansen, Melf, 75053 Gondelsheim (DE)
(74) Vertreter: Rüger, Barthelt & Abel

(56) Entgegenhaltungen:
- EP-A1- 1 598 517
- EP-A2- 0 652 136
- US-A- 2 463 303
- US-A- 4 139 231

## Beschreibung

Zum Beschatten von Kraftfahrzeugfenstern ist es bekannt, Rolloanordnungen zu verwenden. Die Rollos weisen eine im Kraftfahrzeug ortsfest gelagerte Wickelwelle auf, an der mit einer Kante die Rollobahn befestigt ist. Mit Hilfe einer Antriebseinrichtung wird die Rollobahn von der Wickelwelle abgezogen. Als Antriebseinrichtung sind eine Vielzahl von Getriebeeinrichtungen bekannt.

Bei einer anderen Gruppe von Fensterrollos geschieht das Abziehen manuell, indem ein an der Vorderkante der Rollobahn befestigter Griff angefasst und von der Wickelwelle weggeführt wird. Als Vorderkante der Rollobahn wird hierbei jene Kante verstanden, die bei der Auszugsbewegung die größte Strecke zurücklegt.

Das Einfahren des Rollos geschieht üblicherweise mit Hilfe eines Federmotors.

Für den Federmotor sind aus dem Stand der Technik ebenfalls zwei Lösungen bekannt. Gemäß der einen Lösung wird innerhalb der Wickelwelle, die rohrförmig gestaltet ist, eine Schraubenfeder angeordnet. Die Schraubenfeder ist einends an der Karosserie festgelegt und andernends drehfest mit der Wickelwelle verbunden.

Beim Abziehen der Rollobahn wird der Federmotor aufgezogen. Hierdurch wird elastische Energie gespeichert, die in Bewegung umgesetzt wird, wenn die Rollobahn auf der Wickelwelle wieder aufgewickelt wird.

Das Auf- oder Abwickeln erfordert ca. 10 Umdrehungen der Wickelwelle.

Neben der Verwendung einer Schraubenfeder als Federmotor sind auch Federmotoren auf der Basis von Spiralfedern bekannt. Spiralfedern haben den Vorteil, dass die Vorspannkraft über den Hub des Federmotors nahezu konstant ist. Der Federmotor auf der Basis einer Spiralfeder braucht deswegen keinen nennenswert größeren Hub zu haben als es der erforderlichen Anzahl von Umdrehungen der Wickelwelle entspricht. Es genügt, wenn der Spiralfedermotor mit einem der erforderlichen Toleranz entsprechenden Überhub versehen wird.

US 2463 303 A offenbart eine Federmotoranordnung mit einem topfförmigen Federgehäuse, mit einer Spiralfeder, die unter Ausbildung mehrerer Federlagen in dem topfförmigen Federgehäuse untergebracht ist und an dem radial inneren Ende mit einer Welle gekuppelt ist, und mit wenigstens einer Dämpfungsscheibe, die an einer Seite der Spiralfeder anliegt.

EP 1 598 517 A1 offenbart einen Spiralfederantrieb für eine Rolloanordnung in einem Kraftfahrzeug. Die Spiralfeder ist in einem Federgehäuse befestigt und mit einer Kuppelwelle verbunden, die sich koaxial an die Wickelwelle anschließt und drehfest mit dieser verbunden ist.

Der Spiralfedermotor ist obendrein auch verhältnismäßig klapperfrei gegenüber von Fahrzeugerschütterungen.

Allerdings zeigt der Spiralfedermotor beim Ablaufen oder Aufziehen die unangenehme Eigenschaft, dass die Federwindungen bei einer zügigen Bewegung des Federmotors im Übergang von dem einen Wickel auf den anderen Wickel Radialschwingungen vollführen, die zu Klappergeräuschen führen. Diese beiden Wickel des Spiralfedermotors ergeben sich aus jenem Anteil, der an der Innenseite des Federgehäuses anliegt und den anderen Anteil der auf der Welle des Federmotors bereits als Wickel aufgewickelt ist.

Ausgehend hiervon ist es Aufgabe der Erfindung einen Federmotor zu schaffen, der als elastisches Glied eine Spiralfeder aufweist und der nicht die oben erläuterten Klapper- oder Surrgeräusche erzeugt.

Ferner ist es Aufgabe der Erfindung eine Rolloeinrichtung zu schaffen, bei der die Wickelwelle über einen Federmotor mit Spiralfeder angetrieben wird, der ebenfalls geräuschfrei ist.

Diese Aufgabe wird erfindungsgemäß mit einer Rolloeinrichtung mit den Merkmalen des Anspruches 15 bzw. einem Federmotor mit den Merkmalen des Anspruches 1 gelöst.

Bei der Rolloeinrichtung für Kraftfahrzeuge ist eine aufwickelbare Bahn vorgesehen. Zum Aufwickeln der Bahn dient eine Wickelwelle, die im Fahrzeug ortsfest sowie drehbar gelagert ist. Um die Wickelwelle im Sinne des Aufwickelns der Rollobahn in Umdrehungen zu versetzen ist der erfindungsgemäße Federmotor mit Spiralfeder vorgesehen, die in einem topfförmigen Gehäuse untergebracht ist. Damit die Federwindungen beim zügigen Laufen des Federmotors mit ihren Flachseite nicht aufeinander schlagen können, ist eine Dämpfungsscheibe vorgesehen, die an die Flanke des Spiralfederpakets anliegend gehalten wird. Sie wirkt somit gegen die Schmalseite der Federwindungen, und zwar überwiegend gegen jenen Teil der Federwindungen, die im Übergangsbereich zwischen dem auf- und dem abgewickelten Paket Federlagen liegen.

Beim Lauf des Federmotors bildet sich ein Zwischenbereich, in dem die Federwindungen nicht aufeinander liegen, sondern deutlich voneinander beabstandet sind. Dieser Bereich bewegt sich während des Laufs des Federmotors in radialer Richtung durch das topfförmige Gehäuse des Federmotors. Beim Übergang der Federwindungen durch diesen lockeren Bereich kann es zu Radialschwingungen der Federwindungen, durch die die Federwindungen unter Geräuschentwicklung aufeinander schlagen. Die Dämpfungsscheibe bremst die Radialschwingungen.

Bei der erfindungsgemäßen Rolloeinrichtung kann es sich um ein Fensterrollo, beispielsweise ein Heckscheiben-oder ein Seitenfensterrollo, handeln. Eine andere Anwendung ist die Ausbildung der Rolloeinrichtung als Laderaumabdeckung. Wieder eine andere Ausführung ist die Ausbildung der Rolloeinrichtung als Trenngittereinrichtung.

Die Spiralfeder kann sowohl koaxial zu der Wickelwelle angeordnet sein als auch neben deren Flanke bzw. den darauf befindlichen Wickel, der durch die Rollobahn gebildet ist.

Je nach Antriebskinematik kann das Federgehäuse ortsfest sein, oder drehfest mit der Wickelwelle gekuppelt.

Einfache Widerlagerverhältnisse für die Dämpfungsscheibe ergeben sich, wenn dem Gehäuse ein Deckel zugeordnet ist, der das Federgehäuse gegebenenfalls mit Ausnahme einer Achs- oder Wellenbohrung verschließt. Die Dämpfungsscheibe kann auch den Deckel des Gehäuses bilden.

Zur drehfesten Verankerung der Spiralfeder kann das außen liegende Ende zu einer Schlaufe gebogen sein, oder aber es ist gelocht, wie dies von Uhrwerksfedern bekannt ist.

Das innen liegende Ende ist im einfachsten Falle rechtwinklig abgebogen, um einen radial verlaufenden gerade Abschnitt zu bilden.

Die Dämpfungsscheibe kann aus einem nachgiebigen, jedoch hinreichend steifen Kunststoffmaterial bestehen. Das Material so ausgewählt, dass es günstige Reibpaarungen mit dem Federstahl ergibt. Insbesondere muss sichergestellt sein, dass die Dämpfungsscheibe hinreichend abriebfest ist und in dem gesamten Temperaturbereich, wie er in einem Fahrzeug vorkommt, hinreichend große Rücksprungkräfte erzeugen kann.

Andererseits darf die Oberfläche nicht zu glatt und reibungsarm sein, weil sonst der Zweck die Radialschwingungen der Federwindung beim Übergang zwischen den beiden Stapeln zu dämpfen nicht erreicht werden kann. Welches Material im Einzelnen dafür geeignet ist, kann der Fachmann empirisch ermitteln.

Die Dämpfungsscheibe ist zum Erzeugen der Anlagekraft an den Federwindungen mit Erhöhungen versehen. Diese Erhöhungen können die Gestalt von Kugelkalotten oder einer Rinne haben, die um die Achse der Dämpfungsscheibe herum verläuft, da von den Klapper- oder Surrgeräuschen überwiegend der mittlere Bereich der Spiralfeder betroffen ist.

Die Reibung, die die Dämpfungsscheibe ergibt, darf andererseits nicht so groß sein, als dass sie die Wirkung des Federmotors blockiert.

Im Falle der Verwendung von Kugelkalotten ist der Durchmesser der Kalotte im Bereich, wo sie in die Ebene der Dämpfungsscheibe übergeht, kleiner als der halbe Durchmesser.

Im Übrigen sind Weiterbildungen der Erfindung Gegenstand von Unteransprüchen.

Die nachfolgende Figurenbeschreibung beschränkt sich auf die Erläuterung der wesentlichen Aspekte der Erfindung. Es ist klar, dass eine Reihe von Abwandlungen möglich sind. Kleinere, nicht beschriebene Details kann der Fachmann in der gewohnten Weise den Zeichnungen entnehmen, die insoweit die Figurenbeschreibung ergänzen.

In der Zeichnung ist ein Ausführungsbeispiel des Gegenstandes der Erfindung dargestellt. Es zeigen:
- Fig. 1: einen Blick in den Fondbereich eines aufgebrochen gezeigten PKW's, in einer perspektivischen Darstellung;
- Fig. 2: ein Ausführungsbeispiel des Heckfensterrollos des Kraftfahrzeugs nach Fig. 1, mit einem erfindungsgemäßen Spiralfedermotor;
- Fig. 3: den Spiralfedermotor nach Fig. 2, in einer schematisierten perspektivischen Explosionsdarstellung;
- Fig. 4: die Dämpfungsscheibe des Federmotors nach Fig. 3;
- Fig. 5: eine alternative Anordnung des Federmotors parallel zu der Wickelwelle,
- Fig. 6: eine Draufsicht auf das Federgehäuse mit darin befindlicher Spiralfeder und
- Fig. 7: einen aufgebrochen veranschaulichten Heckbereich eines Kombi-PKW unter Veranschaulichung der weiteren Rolloeinrichtungen zur Verwendung des erfindungsgemäßen Spiralfedermotors.

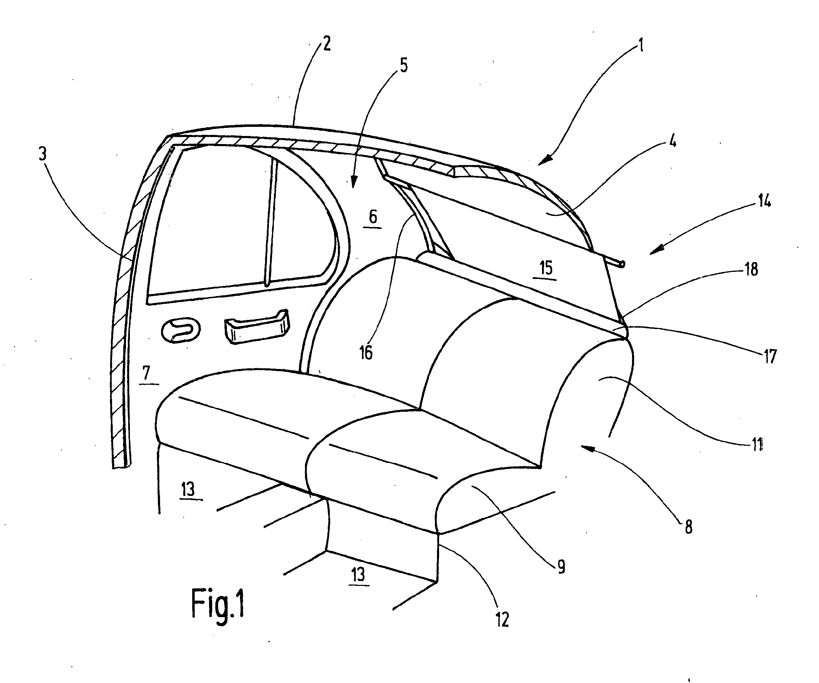

Fig. 1 stellt den aufgebrochenen abgeschnittenen Fondbereich eines Pkw dar. Die Figur veranschaulicht einen Blick auf die rechte Innenseite, die zu der weggebrochenen linken Innenseite spiegelbildlich ist. Die Darstellung ist vereinfacht, so sind beispielsweise Karosserieinnenstrukturen, wie Versteifungen und Befestigungsmittel, nicht gezeigt, da die Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule, die sich im Abstand zu der B-Säule 3 befindet. Die C-Säule 5 trägt eine Innenverkleidung 6. Die Breite des Heckfensters 4 ist in der Nähe seiner Oberkante geringer als auf der Höhe der Gürtellinie der Karosserie.

Zwischen der B-Säule 3 und der C-Säule 5 ist an der B-Säule eine hintere rechte Seitentür 7 in der bekannten Weise anscharniert.

Auf der Höhe der hinteren rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Auf der Innenseite vor dem Heckfenster 4 befindet sich ein Heckscheibenrollo 14. Von dem Heckscheibenrollo 14 ist dessen teilweise ausgezogener Rollobahn 15 sowie eine der seitlichen Führungsschienen 16 zu erkennen. Die Führungsschiene 16 beginnt an einer hinter der Rücksitzlehne 11 vorhandenen Hutablage 17 und verläuft neben der seitlichen Fensterkante. Eine weitere Führungsschiene befindet sich spiegelbildlich in dem wegggebrochen Teil der Karosserie. Die Führungsschienen besteht aus Kunststoff und sind in der die C-Säule 5 verkleidenden Innenverkleidung integriert.

Außerdem enthält die Hutablage 17 einen durchgehenden Auszugsschlitz 18, aus dem die Rollobahn 15 beim Ausfahren herausläuft.

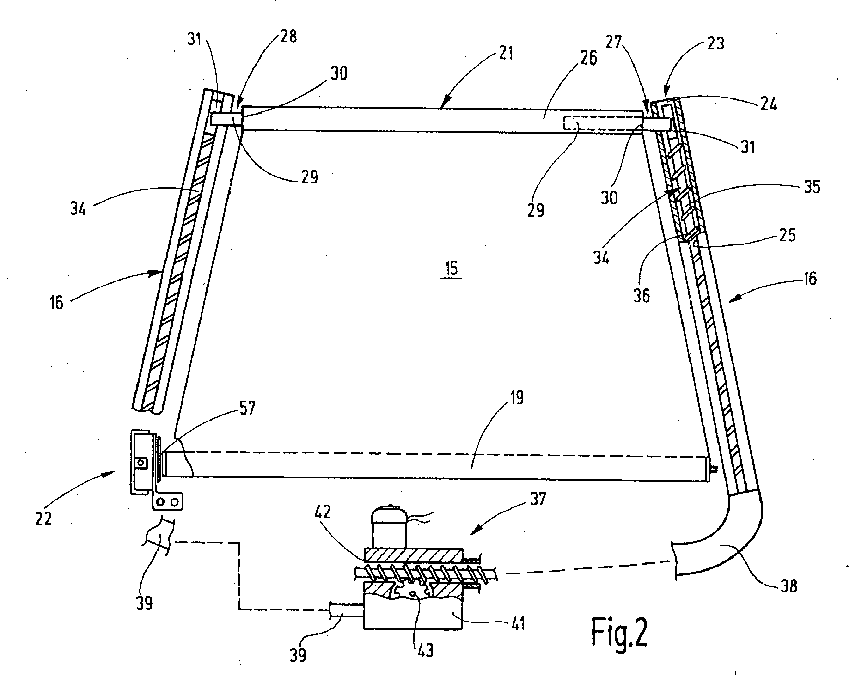

Der prinzipielle Aufbau des Heckscheibenrollos 14 ergibt sich aus Fig. 2.

Der prinzipielle Aufbau des Heckscheibenrollos 14 ergibt sich aus Fig. 2.

Zu dem Heckfensterrollo 14 gehören neben der Rollobahn 15 eine unterhalb des Auszugsschlitzes 18 beziehungsweise unterhalb der Hutablage 17 ortsfest drehbar gelagerte Wickelwelle 19 sowie ein Auszugsprofil 21. Die Rollobahn 15 ist in Annäherung der Fenstergeometrie trapezförmig zugeschnitten und somit am oberen Ende schmäler als dem unteren Ende neben der Wickelwelle 19.

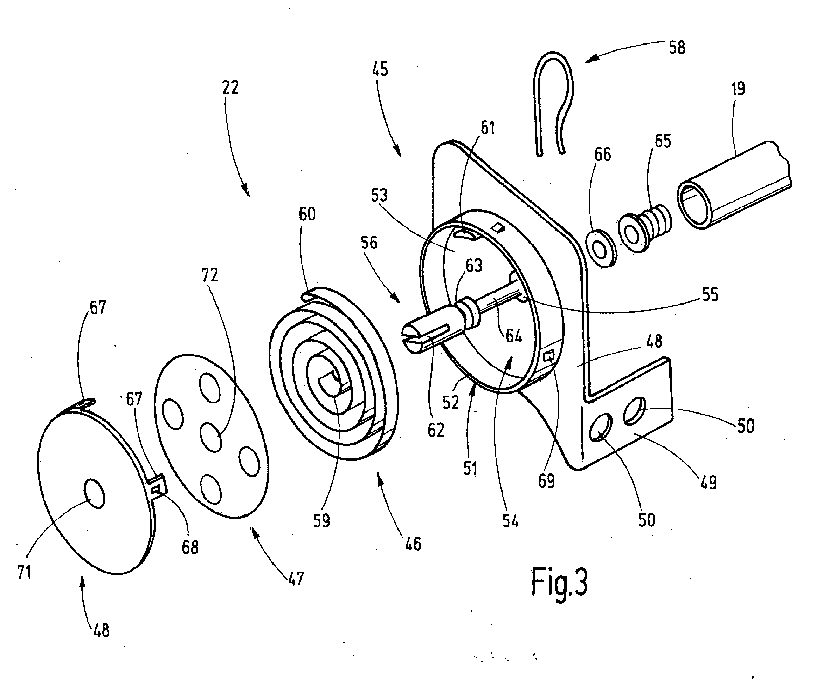

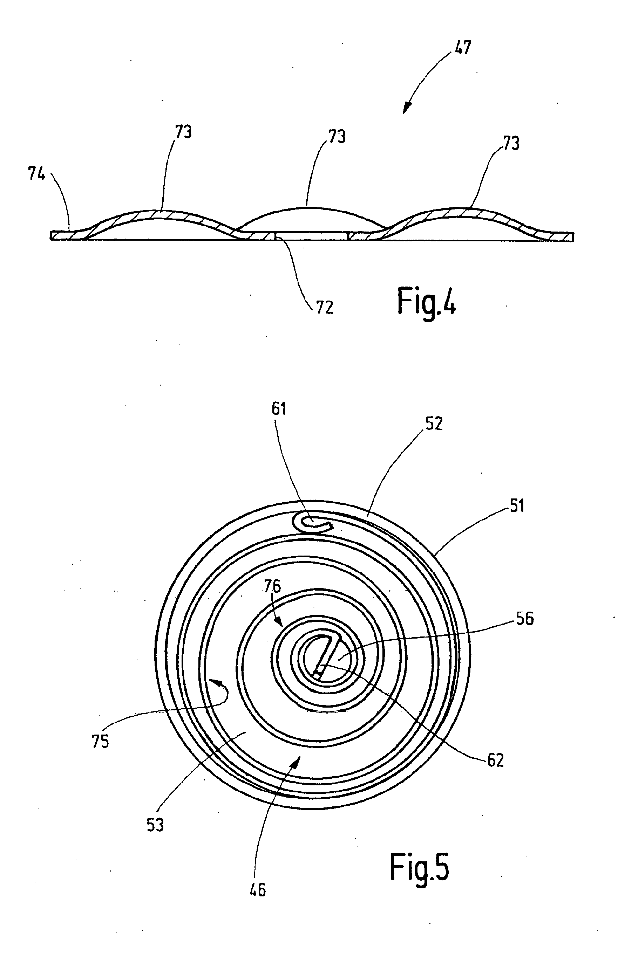

An der Wickelwelle 19 ist mit einer Kante die Rollobahn 15 befestigt. Mit Hilfe einer erfindungsgemäßen Federmotoranordnung 22, die außerhalb der Wickelwelle 19 angeordnet ist, wird die Wickelwelle 19 im Sinne eines Aufwickelns der Rollobahn 15 auf die Wickelwelle 19 vorgespannt. Der Aufbau der Federmotoranordnung 22 wird weiter unten in Verbindung mit Fig. 3 und 4 näher erläutert.

Das Auszugsprofil 21 ist beidends in den beiden Führungsschienen 16 geführt. Diese sind hinter der Seitenverkleidung 6 der C-Säule 5 angeordnet, folgen in ihrem Verlauf etwa der Kontur des Heckfensters 4 und konvergieren entsprechend in Richtung auf ihr oberes Ende. In Fig. 2 sind sie der Einfachheit halber gerade gezeigt. Die Führungsschienen 16 beginnen unterhalb der Hutablage 17 und enden in der Nähe der Oberkante des Heckfensters 4.

Die beiden Führungsschienen 16 haben den selben Aufbau. Es genügt damit, die Gestalt anhand einer der beiden Führungsschienen 16 im Einzelnen zu erläutern.

Die Führungsschiene 16 enthält eine Führungsnut 23, deren Querschnitt sich aus einer Nutenkammer 24 und einem Nutenschlitz 25 zusammensetzt. Der Nutenschlitz 25 zeigt eine geringere Weite als die Nutenkammer 24, die im Querschnitt kreisförmig ist.

Der Nutenschlitz 25 öffnet sich in Richtung auf das Heckfenster 5 und somit bei der schematischen Darstellung in Richtung auf den Betrachter.

Das Auszugsprofil 21 setzt sich aus einem Mittelstück 26 mit unveränderlicher starrer Länge und zwei teleskopisch verschiebbaren Endstücken 27 und 28 zusammen. Die beiden Endstücke 27 und 28 sind wiederum zueinander spiegelbildlich, weshalb es genügt, lediglich eines der beiden im Einzelnen zu erläutern. Die Beschreibung gilt sinngemäß auch für das andere der beiden Endstücke 27, 28, wobei zur Bezeichnung der dort vorhandenen Strukturen die selben Bezugszeichen verwendet werden.

Zu dem Endstück 27 gehört eine als Flachkant ausgebildete Stange 29, die in einem nicht weiter dargestellen Aufnahmekanal innerhalb des Mittelstücks 26 längs verschieblich unverdrehbar geführt ist und aus einem benachbarten Stirnende 30 des Mittelstücks 26 hervorsteht. Um das Eintauche der Stange 29 in das Mittelstück zu versinnbildlichen ist die Stange 29 auf der rechten Seite innerhalb des Mittelstücks 26 gestrichelt gezeichnet.

Die Stange 29 ist an ihrem freien aus dem Mittelstück 26 herausstehenden Ende bezogen auf die Zeichenebene nach unten in Richtung auf den Schlitz 25 abgewinkelt und führt durch den Schlitz 25 in die Führungsnut 23 hinein. Innerhalb der Führungsnut 23 ist an der Stange 29 ein Gleitstück 31 befestigt. Das Gleitstück 31 weist eine Gestalt auf, die mit dem Querschnitt der Nutenkammer 24 zusammenpasst. Die Dicke der Stange 29 ist so bemessen, dass sie klemmfrei durch den Führungsschlitz 25 laufen kann.

Die Rollobahn 15 ist, wie bereits erwähnt, trapezförmig zugeschnitten und wird von zwei Seitenkanten 32 und 33 begrenzt, die bei ausgezogener Rollobahn etwa parallel zu den beiden Führungsschienen 16 laufen. Das untere Ende der Rollobahn 15 ist in bekannter Weise an der Wickelwelle 19, beispielsweise über eine Verklebung befestigt, während die obere Kante an dem Mittelstück 26 verankert ist. Die Verbindung zwischen dem Mittelstück 26 und der Rollobahn 15 ist bekannt und, da sie nicht Gegenstand der Erfindung ist, braucht sie auch im Einzelnen nicht erläutert zu werden.

Um die Rollobahn 15 vor dem Heckfenster 4 aufspannen zu können, läuft in jeder der beiden Nutenkammern 24 jeweils ein ausknicksicher geführtes biegeelastisches lineares Schubglied 34. Das Schubglied 34 setzt sich aus einer im Querschnitt kreisförmigen Seele 35 und einer auf der Seele 35 an deren Außenseite verlaufenden Wendel 36 zusammen. Die Wendel 36 ist mit der Seele 35 starr verbunden und bildet auf der Außenseite der Seele 35 gleichsam eine rundum laufende Verzahnung. Insoweit kann das lineare Schubglied 34 als beigeelastische rundumverzahnte Zahnstange aufgefasst werden. Das Schubglied 34 stößt mit seinem freien Ende gegen das benachbarte Stirnende des Gleitstücks 31.

Die beiden Schubglieder 34 werden über einen gemeinsamen Getriebemotor 37 bewegt, weshalb von dem unteren Ende jeder Führungsschiene 16 ein Führungsrohr 38, 39 zu dem Getriebemotor 37 führt. Dieser umfasst ein Getriebegehäuse 41, durch das zwei Bohrungen 42 parallel zueinander hindurch führen. Wegen der aufgebrochenen Darstellung ist lediglich eine der beiden Bohrungen 42 in der Figur erkennbar. Diese Bohrungen 42 laufen tangential an einem Zahnrad 43 vorbei, das drehfest auf einer Getriebeausgangswelle des Getriebemotors 37 sitzt. Das Zahnrad 43 ist mit einer Verzahnung versehen, die zu der Teilung der Wendel 36 auf der Seele 35 passt. Es entsteht eine formschlüssige Verbindung zwischen dem Zahnrad 43 und jedem der beiden Schubglieder 34.

Da die beiden Schubglieder 34 an diametral gegenüberliegenden Seiten mit dem Zahnrad 43 kämmen, werden sie bei der Rotation des Zahnrades 43 jeweils um gleiche Beträge in entgegengesetzter Richtung bewegt.

Der aus der Sicht des betreffenden Führungsrohres 38, 39 über das Zahnrad 43 überstehende Teil des betreffenden Schubgliedes 34 wird in einem nicht weiter gezeigten Speicherrohr aufgenommen.

Die insoweit beschriebene Anordnung arbeitet wie folgt:

Bei vollständig eingefahrenem Rollo 14 liegt das Auszugsprofil 21 auf dem Auszugsschlitz 18 in der Hutablage 17 auf und verdeckt diesen, zumindest über die Länge des Mittelstücks 26. In der eingefahrenen Stellung ist das Auszugsprofil 21 maximal an die Wickelwelle 19 angenähert und befindet sich somit auch in einem Bereich, in dem die beiden Führungsschienen 16 voneinander den maximalen Abstand aufweisen. Da die Länge des Mittelstücks 26 konstant ist, sind zur Kompensation des Abstands der beiden Führungsschienen 16 die Endstücke 28, 29 maximal aus dem Mittelstück 26 herausgezogen. Sie stecken jedoch mit ihren Enden nach wie vor in dem Mittelstück 26 verschiebbar.

Um diese Position zu ermöglichen, sind durch entsprechendendes Ingangsetzen des Getriebemotors 37 die beiden Schubglieder 34 weit genug aus den Führungsschienen 19 zurück gezogen, damit das Auszugsprofil 21 auf der Hutablage 17 aufliegen kann.

Wenn ausgehend von dieser eingefahrenen Stellung die Rollobahn 15 vor dem Heckfenster 4 ausgebreitet werden soll, wird der Getriebemotor 37 in Gang gesetzt. Der Getriebemotor 37 schiebt in entgegengesetzte Richtung, jedoch um gleiche Beträge, die beiden Schubglieder 34 in die -Führungsschienen 16 vor. Gegen die Wirkung der Federmotoranordnung 22, der ständig bestrebt ist die Rollobahn 15 auf der Wickelwelle 19 aufzuwickeln, wird das Auszugsprofil 21 in Richtung auf die Oberkante des Heckfensters 4 und damit in Richtung auf das obere Ende der beiden Führungsschienen 16 bewegt. Die Kraft, die der Getriebemotor 37 erzeugen kann, ist größer als die Rückzugskraft, die die Federmotoranordnung 22 ausübt.

Zum Einfahren des Rollos wird der Getriebemotor 37 mit der entgegengesetzten Drehrichtung in Gang gesetzt. Er zieht die Schubglieder 34 in die nicht veranschaulichten Speicherrohre zurück, so dass die Federmotoranordnung 22 die Wickelwelle 19 im Sinne eines Aufwickelns der Rollobahn 15 in Gang setzen kann. Um die Reibung zu überwinden, können die Schubglieder 34 zusätzlich mit ihren dem Gleitschubkörper 31 benachbarten Enden mit diesem formschlüssig verbunden sein, um so das Auszugsprofil 21 zwangsweise in Richtung auf die Wickelwelle 19 zu bewegen. Die Federmotoranordnung 22 kann dann schwächer ausgelegt werden insofern, dass sie lediglich die Kraft aufbringen muss die erforderlich ist, um die Wickelwelle 9 entsprechend in Gang zu setzen bzw. die Rollobahn 15 in der gewünschten Weise straff zu halten.

Der Aufbau der Federmotoranordnung 22 wird nachstehend anhand von Fig. 3 erläutert. Zu der Federmotoranordnung 22 gehört ein topfförmiges Gehäuse 45, eine Spiralfeder 46, eine Dämpfungsscheibe 47 sowie ein Deckel 48.

Das topfförmige Gehäuse 45 ist ein Kunststoffspritzteil und setzt sich aus einer Grundplatte 48 zusammen, an der ein Befestigungswinkel 49 angebracht ist, der mit Befestigungsöffnungen 50 versehen ist. Mit Hilfe des Befestigungsflansches 49 ist das Gehäuse 45 karosseriefest zu verankern. Aus der Grundplatte 48, die im Übrigen plan ist und sich im weitersten Sinne rechtwinklig zu der Längsachse der Wickelwelle 19 erstreckt, erhebt sich ein zylindrischer Kragen 51, der an einem Rand 52 endet. Der Rand definiert eine Ebene die zu der Grundplatte 48 parallel ist. Innerhalb des Kragens 51 bildet die Grundplatte 48 einen ebenen Boden 53 des Gehäuses 45.

Der zylindrische Kragen 51 und der Boden 53 begrenzen einen kurzen, zylindrischen Innenraum 54, d.h. einen zylindrischen Innenraum 54 mit geringer axialer Tiefe.

Konzentrisch zu dem Kragen 51 ist in der Grundplatte 48 eine Durchgangsöffnung 55 enthalten, durch die eine Kuppelachse 56 hindurch führt. Auf der dem Kragen 51 gegenüberliegenden Rückseite der Grundplatte 48 ist ein kurzer, rohrförmiger Fortsatz 57 vorgesehen, der seitlich eine tangentiale Öffnung für eine Federklammer 58 aufweist. Die Federklammer 58 ist, wie gezeigt, U-förmig aus Draht gebogen und dient in weiter unten beschriebener Weise um zu verhindern, dass die Kuppelachse 56 in der Bohrung 55 klappert.

Die Spiralfeder 46 besteht aus Federbandstahl und ist, wie gezeigt, zu einer mehrgängigen Spirale aufgewickelt, wobei die Flachseiten des Bandstahls einander gegenüberliegen. Die Spiralfeder 46 weist ein innenliegendes Ende 59 sowie ein außen liegendes Ende 60 auf. Das innenliegende Ende 59 ist zu einer kurzen Lasche umgeformt, die rechtwinklig zu der letzten Federwindung umgebogen ist und damit etwa parallel zu dem Radius, der als Kreisscheibe gedachten Spiralfeder 46 liegt.

Das außen liegende Federende 60 ist, wie gezeigt, zu einer Schlaufe nach innen umgeschlagen. Mit Hilfe der Schlaufe 60 wird das außen liegende Ende auf einem Zapfen 61 verankert, der in der Nähe der Innenseite des Kragens 51 aus der Grundplatte 48 vorsteht.

Die Kuppelwelle 56 dient dazu, das innen liegende Federende 59 mit der Wickelwelle 19 zu kuppeln. Hierzu weist die im Wesentlichen zylindrische Kuppelwelle 56 an ihrem nach links zeigenden Ende einen Schlitz 62 auf, in den das Federende 59 einzulegen ist. Im Abstand zu dem Schlitz 62 enthält die Kuppelwelle 56 eine umlaufende Ringnut 63, die im montierten Zustand mit der tangentialen Öffnung in dem Fortsatz 57 fluchtet und in der ein Schenkel der U-förmigen Feder 58 liegt. Mit Hilfe der Feder 58 wird die Kuppelwelle gegen eine Seite der Durchgangsbohrung 55 angedrückt, um eine Klapperfreiheit herzustellen. Im Anschluss an die Nut oder Rille 63 verjüngt sich der Durchmesser der Kuppelwelle 56 in einem Wellenabschnitt 64, der drehfest in einer Verbindungsmuffe 65 steckt. Die Verbindungsmuffe 65 sitzt im montierten Zustand drehfest in der rohrförmigen Wickelwelle 19.

Um in axialer Richtung Klapperfreiheit herzustellen ist außerdem eine Filzscheibe 66 vorgesehen, die zwischen der Verbindungsmuffe 65 und dem rohrförmigen Ansatz 57 liegt.

Das Federgehäuse 45 wird durch einen scheibenförmigen Deckel 48 verschlossen, der an seinem peripheren Rand mehrere, parallel zu der Achse der Spiralfeder 46 verlaufende Laschen 67 trägt, die mit Öffnungen 68 versehen sind. Die Laschen 67 übergreifen den Kragen 51 an der Außenseite und sind so gestaltet, dass sie mit Nasen 69 auf der Außenseite des Kragens verrastbar sind. Die Nasen 69 ragen im montierten Zustand durch die Öffnungen 68 hindurch.

Außerdem enthält der Deckel 48 eine Lagerbohrung 71 für das benachbarte Ende der Kuppelwelle 56. Die Bohrung 71 nimmt jenen Stummel der Kuppelwelle 67 auf, der über das Federende 68 in axialer Richtung in Richtung auf den Deckel 48 vorsteht.

Der Deckel 48 ist auf der der Spiralfeder 46 zugekehrten Seite plan und bildet eine Anlagefläche für die Dämpfungsscheibe 47.

Die Dämpfungsscheibe 47 liegt im montierten Zustand zwischen dem Deckel 48 und der benachbarten Flankenseite der Spiralfeder 46. Die Dämpfungsscheibe 47 ist eine kreisförmige Scheibe mit einer zentralen Bohrung 72 für den Durchtritt der Kuppelwelle 56 und einem Durchmesser gleich dem Innendurchmesser des Gehäuses 45. Sie besteht aus einem Kunststoffmaterial, beispielsweise PET und weist eine Dicke von ca. 0,2 mm auf. Die Dämpfungsscheibe 47 ist in ihrer Querschnittsgestalt in Fig. 4 gezeigt. Wie der Querschnitt erkennen lässt, weist die Dämpfungsscheibe 47 insgesamt vier gleichmäßig um die zentrale Öffnung 72 herum verteilte Erhöhungen 73 auf. Die Erhöhungen 73 haben die Gestalt von Kugelkalotten. Ihre Höhe gegenüber der benachbarten planen Oberseite 74 beträgt ca. 0,8 mm. Der Durchmesser jeder Kugelkalotte 43 ist am Fuß, also an jener Stele, an der sie den größten Durchmesser haben und in die Ebene der Scheibe 47 übergehen, kleiner als der halbe Durchmesser. Wie zu erkennen ist, beginnen die Kugelkalotten 73 im Abstand zu dem äußeren kreisförmigen Rand der Dämpfungsscheibe 47 und enden ebenfalls im Abstand zu der Bohrung 42.

Die Dämpfungsscheibe 47 ist so eingelegt, dass die Erhöhungen 73 zu dem Deckel 48 vorstehen. Ohne Vorspannung wird die Dämpfungsscheibe 47 demzufolge an vier Punkten, nämlich den Scheitelpunkten der Erhöhungen 73 an dem Deckel 48, anliegen.

Der freie Abstand zwischen der dem Boden 53 des topfförmigen Innenraums 54 und der benachbarten Innenseite des aufgesetzten Deckels 48 ist geringfügig größer als die Dicke der Spiralfeder 46, gemessen in der axialen Richtung. Dadurch wird erreicht, dass die Dämpfungsscheibe 47 in den durch den Deckel 48 geschlossenen Federgehäuse 45 Platz findet, wobei gleichzeitig die Dämpfungsscheibe 47 im Bereich der Erhöhungen 73 geringfügig elastisch verformt ist.

Die Verformung der Dämpfungsscheibe 47 ist im montierten Zustand elastisch, d.h. auch reversibel. Hierdurch wird eine konstante Kraft erzeugt, mit der die Dämpfungsscheibe 47 gegen die benachbarte Flanke der Spiralfeder 46 angedrückt wird, bzw. die Spiralfeder 46 gegen den Boden des Federgehäuses 45.

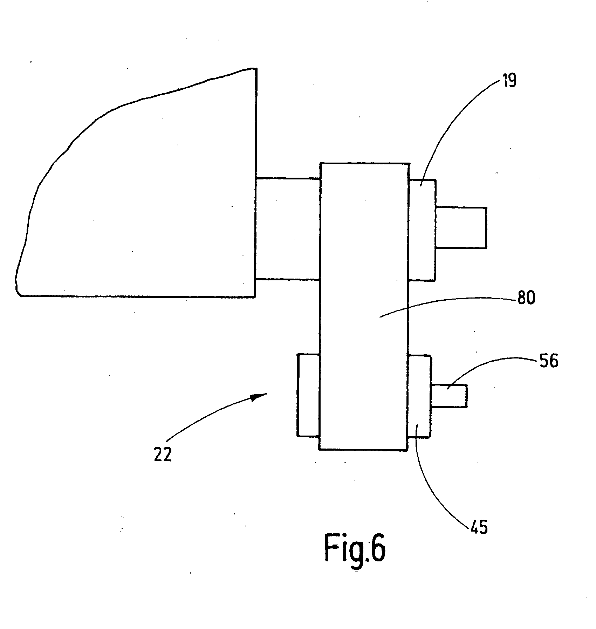

Um das Verständnis für die Erläuterung des Entstehens der Surrgeräusche beim Lauf des Federmotors 22 besser verstehen zu können wird auf Fig. 6 Bezug genommen. Fig. 6 zeigt den Federmotor 22 in einer Draufsicht auf das geöffnete Federgehäuse 45, aus der Sicht des Deckels 48 auf die benachbarte Seitenflanke der Spiralfeder 46. Zu erkennen ist der Rand 52 des topfförmigen Gehäuses 45 das nach außen durch den Kragen 51 begrenzt ist. Zwischen den Federwindungen ist ferner der Boden 53 zu sehen sowie das Stirnende der Kuppelwelle 56 mit dem darin enthaltenen Schlitz 62.

Im teilweise aufgezogenem, bzw. abgelaufenen Zustand des Federmotors 22 entsteht ein radial außen liegendes Paket 75 von dicht aufeinander liegenden Federlagen sowie ein radial innen liegendes Paket 76 von ebenfalls dicht aufeinander liegenden Federlagen. Beide Pakete haben eine ringförmige Gestalt. Beim Aufziehen des Federmotors 22 würde das Paket 76 radial in der Dicke zunehmen, während das Paket 75 abnimmt und entsprechend Federlagen an das Paket 76 übergibt. Die beiden Pakete 75 und 76 sind durch einen Raum voneinander getrennt, in dem, wie gezeigt, die Federwindungen einen verhältnismäßig großen Abstand voneinander haben, während sie in den Paketen 75 und 76 mit ihren Flachseiten dicht aufeinander liegen.

Dieser Bereich mit locker liegenden Federwindungen wandert beim Aufziehen oder Ablaufen des Federmotors 22 in radialer Richtung durch den Innenraum 54 des topfförmigen Gehäuses 45.

Das Ablaufen der Federwindungen, beispielsweise von der Innenseite des Paketes 75 beim Aufziehen des Federmotors 22, geschieht nicht immer vollkommen gleichmäßig, sondern die Federwindungen lösen sich aufgrund von Hafteffekten ruckartig, was dazu führt, dass in dem lose liegenden Bereich der Federwindungen zwischen den beiden Paketen 75 und 76 Radialschwingungen entstehen. Die Radialschwingungen können dazu führen, dass in dem lockeren Bereich zwischen den beiden Paketen 75 und 76 die Federwindungen aufeinander schlagen und zu einem surrenden oder klapperenden Geräusch führen. Aus Übersichtlichkeitsgründen ist der Bereich zwischen den beiden Paketen 75 und 76 sehr offen gezeigt. Tatsächlich liegen hier die Federwindungen aus platzgründen auch relativ dicht beieinander, ohne sich jedoch zu berühren. Der Abstand ist so klein, dass die Schwingungen das Auftreffen der Federlagen bewirken können.

Da die Dämpfungsscheibe 47 mit ihrer Flachseite gegen die Flanke der Spiralfeder 46 anliegt, werden die Radialschwingungen gedämpft. Die Flanke bildet in Fig. 6 die dem Betrachter zugekehrte Seite der Spiralfeder 46.

Die Erhöhungen 73, die auf der Dämpfungsscheibe 47 vorgesehen sind und mit denen sich die Dämpfungsscheibe 47 an der Innenseite des Deckels 48 abstützt, erzeugen die erforderliche Vorspannkraft, so dass ein Reibeingriff zwischen der Dämpfungsscheibe 47 und den Flanken der Federwindungen zustande kommt. Dieser Reibeingriff bewirkt eine Reibungsdämpfung der Schwingungen. Durch die Vorspannkraft der Dämpfungsscheibe 47 werden die vom Betrachter weg zeigenden Flanken (Fig. 6) gleichzeitig gegen den Boden 53 angedrückt, was ebenfalls zu einer gewissen Dämpfung beitragen kann.

Die gezeigte Dämpfungsscheibe mit den vier kugelkalottenförmigen Erhöhungen stellt lediglich eine denkbare Ausführungsform dar. Eine weitere Variante besteht beispielsweise in der Verwendung einer Dämpfungsscheibe, die eine um die Bohrung 72 konzentrisch umlaufende Rinne oder Sicke enthält, und die ebenfalls gerade in dem hauptsächlich mittleren Bereich gegen die Flanke der Spiralfeder 46 angedrückt gehalten wird. Eine andere Möglichkeit besteht darin, die Dämpfungsscheibe 47 gleichzeitig auch als Deckel auszugestalten, um sowohl die Schließfunktion für das Gehäuse 45 zu erzeugen als auch die gewünschte Dämpfungswirkung der Radialschwingungen.

Gemäß Fig. 6 braucht das topfförmige Gehäuse 45 nicht koaxial zu der Wickelwelle 19 angeordnet zu werden. Es ist auch denkbar, das topfförmige Gehäuse 45 achsparallel neben der Wickelwelle 19 vorzusehen. Der Achszapfen 56 dient dabei der drehfesten und ortsfesten Lagerung für das Gehäuse 45, das auf der Außenseite mit nicht weiter gezeigten Rippen versehen ist. Die Rippen dienen als formschlüssige Zähne für einen endlosen Zahnriemen 80, der in eine entsprechende, nicht gezeigte Verzahnung an der Außenseite der Wickelwelle 19 eingreift.

Im Übrigen ist die Ausgestaltung des Federmotors 22 in der gleichen Weise ausgeführt, wie zuvor beschrieben.

Der Einsatz des erfindungsgemäßen Federmotors 22 ist nicht auf das gezeigte Heckscheibenrollo beschränkt.

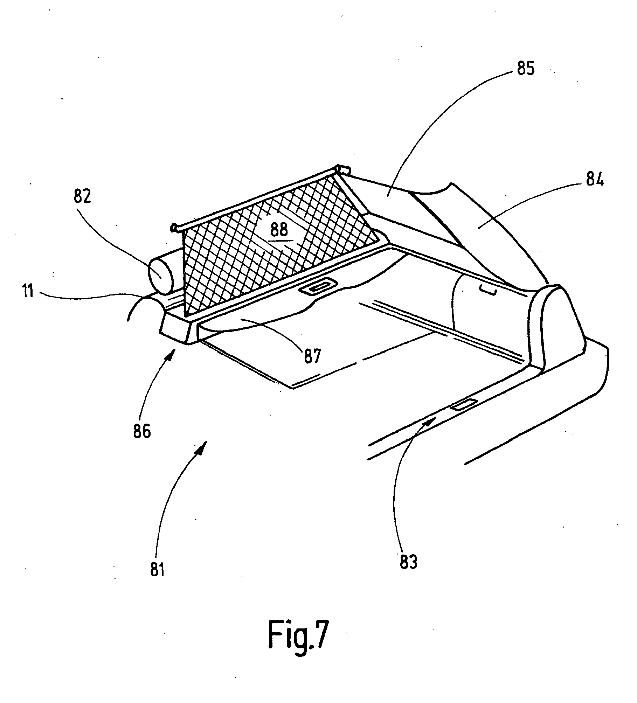

Fig. 7 zeigt einen Blick auf einen aufgebrochen dargestellten Kofferraum 81. Zu erkennen ist die Rückseite der Rücksitzlehne 11 mit darauf stehenden Kopfstützen 82. Außerdem ist die Ladebucht 83 zu sehen, die nach rechts hinten von einer Karosseriesäule 84 begrenzt ist. Neben der Karosseriesäule 84 nach vorne erstreckt sich ein Seitenfenster 85.

An der Rückseite der Rücksitzlehne 11 ist ein längliches kassettenförmiges Gehäuse 86 angebracht, in dem eine Wickelwelle drehbar gelagert ist, auf der eine Abdeckrollobahn 87 aufwickelbar ist. Die Abdeckplane 87 ist dazu eingerichtet, die Ladebucht 83 nach oben gegen Einblicke zu verschließen. Ferner enthält das längliche kassettenförmige Gehäuse 86 ein Trenngitter 88, das ebenfalls auf eine Wickelwelle aufgewickelt ist, die mit einem Federmotor 22 angetrieben ist, wie zuvor ausführlich erläutert ist.

Ein Federmotor weist ein topfförmiges Gehäuse auf, in dem eine Spiralfeder untergebracht ist. Die Spiralfeder ist die am außen liegenden Ende mit dem topfförmigen Gehäuse verbunden, während das innen liegende Ende an einer Welle oder Achse angekuppelt ist. Um Radialschwingungen der einzelnen Federlagen zu verhindern, wenn der Federmotor aufgezogen wird oder abläuft, ist eine Dämpfungsscheibe in dem topfförmigen Gehäuse untergebracht, die an einer Seitenflanke der Spiralfeder angedrückt gehalten wird.

Dieser Federmotor lässt sich insbesondere mit der Wickelwelle von Rolloanordnungen von Kraftfahrzeugen kombinieren. Solche Rolloanordnungen können feste Rollos, Laderaumabdeckungen oder Trenngitter sein.

## Patentansprüche

1. Federmotoranordnung (22)
mit einem topfförmigen Federgehäuse (45),
mit einer Spiralfeder (46), die unter Ausbildung mehrerer
Federlagen in dem topfförmigen Federgehäuse (45) untergebracht ist und an dem radial inneren Ende (59) mit einer Welle (56) gekuppelt ist, und
mit wenigstens einer Dämpfungsscheibe (47), die an einer Seite
der Spiralfeder (46) anliegend gehalten ist um Radialschwingungen von Federlagen zu dämpfen,
**dadurch gekennzeichnet, dass** die Dämpfungsscheibe (47)
Erhöhungen (73) aufweist.

2. Vorrichtung nach Anspruch 1, **dadurch gekennzeichnet, dass** das topfförmige Federgehäuse ortsfest ist.

3. Vorrichtung nach Anspruch 1, **dadurch gekennzeichnet, dass** dem Federgehäuse (45) ein Deckel (48) zugeordnet ist, der das Federgehäuse (45) gegebenenfalls mit Ausnahme einer Achsoder Wellenbohrung (7) verschließt.

4. Vorrichtung nach Anspruch 1, **dadurch gekennzeichnet, dass** die Spiralfeder (46) eine Metallbandspiralfeder ist.

5. Vorrichtung nach Anspruch 1, **dadurch gekennzeichnet, dass** die Dämpfungsscheibe (47) aus einem Kunststoffmaterial besteht.

6. Vorrichtung nach Anspruch 5, **dadurch gekennzeichnet, dass** das Kunststoffmaterial der Dämpfungsscheibe aus den Kunststoffen: PET, Polycyrbonat, ABS ausgewählt ist.

7. Vorrichtung nach Anspruch 5, **dadurch gekennzeichnet, dass** die Dämpfungsscheibe (47) eine Stärke zwischen 0,5 mm und 0,02 mm vorzugsweise um 0,2 mm aufweist.

8. Vorrichtung nach Anspruch 5, **dadurch gekennzeichnet, dass** die Dämpfungsscheibe (47) kreisförmig ist.

9. Vorrichtung nach Anspruch 5, **dadurch gekennzeichnet, dass** der Durchmesser der Dämpfungsscheibe (47) der lichten Weite des Federgehäuses (45) entspricht.

10. Vorrichtung nach Anspruch 1, **dadurch gekennzeichnet, dass** die Abmessungen der Erhöhrungen (73) kleiner sind als es dem halben Durchmesser der Dämpfungsscheibe (47) entspricht.

11. Vorrichtung nach Anspruch 1, **dadurch gekennzeichnet, dass** die Erhöhung (73) die Gestalt einer Kugelkalotte aufweist.

12. Vorrichtung nach Anspruch 1, **dadurch gekennzeichnet, dass** die Erhöhung radial verläuft und die Gestalt eines Zylindersegments aufweist.

13. Vorrichtung nach Anspruch 1, **dadurch gekennzeichnet, dass** die Erhöhung in Umfangsrichtung der Dämpfungsscheibe (47) verläuft.

14. Vorrichtung nach Anspruch 1, **dadurch gekennzeichnet, dass** Erhöhung eine Höhe von zwischen 0,1 mm und 1 mm, vorzugsweise 0,8 mm aufweist.

15. Rolloeinrichtung (14) für Kraftfahrzeuge,
mit einer aufwickelbaren Bahn (15),
mit einer drehbar gelagerten Wickelwelle (19), an der mit
einer Kante die aufwickelbare Bahn (15) befestigt ist,
und
mit einer Federmotoranordnung (22) nach Anspruch 1, wobei die Spiralfeder (46) mit der Wickelwelle (19) kinematisch
gekuppelt ist, um die Wickelwelle (19) im Sinne des Aufwickelns der Bahn (15) auf die Wickelwelle (19) vorzuspannen, mehrere Federlagen bildet und zwei
Seitenflanken aufweist.

16. Vorrichtung nach Anspruch 15, **dadurch gekennzeichnet, dass** die Rolloeinrichtung (14) ein Fensterrollo bildet.

17. Vorrichtung nach Anspruch 15, **dadurch gekennzeichnet, dass** die Rolloeinrichtung (87) eine Laderaumabdeckung bildet.

18. Vorrichtung nach Anspruch 15, **dadurch gekennzeichnet, dass** die Rolloeinrichtung (88) eine Trenngittereinrichtung ist, wobei die aufwickelbare Bahn eine netzartige Struktur aufweist.

19. Vorrichtung nach Anspruch 15, **dadurch gekennzeichnet, dass** die Spiralfeder (46) außerhalb der Wickelwelle (19) angeordnet ist.

20. Vorrichtung nach Anspruch 15, **dadurch gekennzeichnet, dass** die Spiralfeder (46) koaxial zu der Wickelwelle (19) angeordnet ist.

21. Vorrichtung nach Anspruch 15, **dadurch gekennzeichnet, dass** die Spiralfeder (46) seitlich neben der Wickelwelle (19) angeordnet ist.

22. Vorrichtung nach Anspruch 15, **dadurch gekennzeichnet, dass** das topfförmige Federgehäuse (45) ortsfest ist.

23. Vorrichtung nach Anspruch 15, **dadurch gekennzeichnet, dass** das topfförmige Federgehäuse (45) drehfest mit der Wickelwelle (19) gekuppelt ist.

24. Vorrichtung nach Anspruch 15, **dadurch gekennzeichnet, dass** dem Federgehäuse (45) ein Deckel (48) zugeordnet ist, der das Federgehäuse (45) gegebenenfalls mit Ausnahme einer Achs- oder Wellenbohrung (71) verschließt.

25. Vorrichtung nach Anspruch 15, **dadurch gekennzeichnet, dass** die Spiralfeder (46) eine Metallbandspiralfeder ist.

26. Vorrichtung nach Anspruch 15, **dadurch gekennzeichnet, dass** die Spiralfeder (46) ein außenliegendes Ende (60) aufweist, dass zu einer Schlaufe gebogen ist.

27. Vorrichtung nach Anspruch 15, **dadurch gekennzeichnet, dass** die Spiralfeder (46) ein innenliegendes Ende (59) aufweist, das gegenüber der letzten Federwindung rechtwinklig abgebogen ist, um einen radial verlaufenden geraden Abschnitt bildet.

28. Vorrichtung nach Anspruch 15, **dadurch gekennzeichnet, dass** die Dämpfungsscheibe (47) aus einem Kunststoffmaterial besteht.

29. Vorrichtung nach Anspruch 28, **dadurch gekennzeichnet, dass** das Kunststoffmaterial der Dämpfungsscheibe (47) aus den Kunststoffen: PET, Polycyrbonat, ABS ausgewählt ist.

30. Vorrichtung nach Anspruch 15, **dadurch gekennzeichnet, dass** die Dämpfungsscheibe (47) eine Stärke zwischen 0,5 mm und 0,02 mm vorzugsweise um 0,2 mm aufweist.

31. Vorrichtung nach Anspruch 15, **dadurch gekennzeichnet, dass** die Dämpfungsscheibe (47) kreisförmig ist.

32. Vorrichtung nach Anspruch 15, **dadurch gekennzeichnet, dass** der Durchmesser der Dämpfungsscheibe (47) der lichten Weite des Federgehäuses (45) entspricht.

33. Vorrichtung nach Anspruch 15, **dadurch gekennzeichnet, dass** die Abmessungen der Erhöhungen (73) kleiner sind als es dem halben Durchmesser der Dämpfungsscheibe (47) entspricht.

34. Vorrichtung nach Anspruch 15, **dadurch gekennzeichnet, dass** die Erhöhung (73) die Gestalt einer Kugelkalotte aufweist.

35. Vorrichtung nach Anspruch 15, **dadurch gekennzeichnet, dass** die Erhöhung radial verläuft und die Gestalt eines Zylindersegments aufweist.

36. Vorrichtung nach Anspruch 15, **dadurch gekennzeichnet, dass** die Erhöhung in Umfangsrichtung der Dämpfungsscheibe (47) verläuft.

37. Vorrichtung nach Anspruch 15, **dadurch gekennzeichnet, dass** Erhöhung eine Höhe von zwischen 0,1 mm und 1 mm, vorzugsweise 0,8 mm aufweist.

## Claims

1. Spring motor arrangement (22)
with a cup-shaped spring housing (45),
with a spiral spring (46), which is housed in the cup-shaped spring housing (45) with the formation of multiple spring layers and is coupled at the radially inner end (59) to a shaft (56), and
with at least one damping disc (47), which is held in abutment against a side of the spiral spring (46) in order to damp radial oscillations of spring layers, **characterised in that** the damping disc (47) has raised sections (73).

2. Device according to claim 1, **characterised in that** the cup-shaped spring housing is fixed.

3. Device according to claim 1, **characterised in that** the spring housing (45) has an associated cover (48), which closes the spring housing (45) possibly except for an axial or shaft hole (7).

4. Device according to claim 1, **characterised in that** the spiral spring (46) is a metal band spiral spring.

5. Device according to claim 1, **characterised in that** the damping disc (47) is made from a plastic material.

6. Device according to claim 5, **characterised in that** the plastic material of the damping disc is selected from the plastics: PET, polycarbonate, ABS.

7. Device according to claim 5, **characterised in that** the damping disc (47) has a thickness of between 0.5 mm and 0.02 mm, preferably around 0.2 mm.

8. Device according to claim 5, **characterised in that** the damping disc (47) is circular.

9. Device according to claim 5, **characterised in that** the diameter of the damping disc (47) corresponds to the inner width of the spring housing (45).

10. Device according to claim 1, **characterised in that** the dimensions of the raised sections (73) are smaller than half the diameter of the damping disc (47).

11. Device according to claim 1, **characterised in that** the raised section (73) has the shape of a spherical cap.

12. Device according to claim 1, **characterised in that** the raised section runs radially and has the shape of a cylinder segment.

13. Device according to claim 1, **characterised in that** the raised section runs in peripheral direction of the damping disc (47).

14. Device according to claim 1, **characterised in that** the raised section has a height of between 0.1 mm and 1 mm, preferably 0.8 mm.

15. Roller blind arrangement (14) for motor vehicles,
with a sheet (15) that can be wound up,
with a rotatably mounted winding shaft (19), to which the wind-up sheet (15) is fastened at one edge, and
with a spring motor arrangement (22) according to claim 1, wherein
the spiral spring (46) is coupled kinematically to the winding shaft (19) in order to bias the winding shaft (19) in the direction of winding up the sheet (15) onto the winding shaft (19), forms multiple spring layers and has two side flanks.

16. Device according to claim 15, **characterised in that** the roller blind arrangement (14) forms a window roller blind.

17. Device according to claim 15, **characterised in that** the roller blind arrangement (87) forms a cargo area cover.

18. Device according to claim 15, **characterised in that** the roller blind arrangement (88) is a separating mesh arrangement, wherein the wind-up sheet has a mesh-like structure.

19. Device according to claim 15, **characterised in that** the spiral spring (46) is arranged outside the winding shaft (19).

20. Device according to claim 15, **characterised in that** the spiral spring (46) is arranged coaxially to the winding shaft (19).

21. Device according to claim 15, **characterised in that** the spiral spring (46) is arranged laterally adjacent to the winding shaft (19).

22. Device according to claim 15, **characterised in that** the cup-shaped spring housing (45) is fixed.

23. Device according to claim 15, **characterised in that** the cup-shaped spring housing (45) is coupled to the winding shaft (19) to be fixed against rotation.

24. Device according to claim 15, **characterised in that** the spring housing (45) has an associated cover (48), which closes the spring housing (45) possibly except for an axial or shaft hole (71).

25. Device according to claim 15, **characterised in that** the spiral spring (46) is a metal band spiral spring.

26. Device according to claim 15, **characterised in that** the spiral spring (46) has an external end (60), which is bent into a loop.

27. Device according to claim 15, **characterised in that** the spiral spring (46) has an internal end (59), which is bent at right angles in relation to the last spring winding in order to form a radially extending straight section.

28. Device according to claim 15, **characterised in that** the damping disc (47) is made from a plastic material.

29. Device according to claim 28, **characterised in that** the plastic material of the damping disc (47) is selected from the plastics: PET, polycarbonate, ABS.

30. Device according to claim 15, **characterised in that** the damping disc (47) has a thickness of between 0.5 mm and 0.02 mm, preferably around 0.2 mm.

31. Device according to claim 15, **characterised in that** the damping disc (47) is circular.

32. Device according to claim 15, **characterised in that** the diameter of the damping disc (47) corresponds to the inner width of the spring housing (45).

33. Device according to claim 15, **characterised in that** the dimensions of the raised sections (73) are smaller than half the diameter of the damping disc (47).

34. Device according to claim 15, **characterised in that** the raised section (73) has the shape of a spherical cap.

35. Device according to claim 15, **characterised in that** the raised section runs radially and has the shape of a cylinder segment.

36. Device according to claim 15, **characterised in that** the raised section runs in peripheral direction of the damping disc (47).

37. Device according to claim 15, **characterised in that** the raised section has a height of between 0.1 mm and 1 mm, preferably 0.8 mm.

## Revendications

1. Dispositif de moteur à ressort (22),
comprenant un boîtier à ressort (45) en forme de pot,
comprenant un ressort spiral (46) qui est logé dans le boîtier à ressort (45) en forme de pot, en formant plusieurs couches de ressort, et est accouplé à un arbre (56) par son extrémité (59) située radialement à l'intérieur, et
comprenant au moins un disque amortisseur (47) qui est maintenu en étant appliqué contre un côté du ressort spiral (46) pour amortir des vibrations radiales de couches de ressort,
**caractérisé en ce que** le disque amortisseur (47) présente des protubérances (73).

2. Dispositif selon la revendication 1, **caractérisé en ce que** le boîtier à ressort en forme de pot est fixe.

3. Dispositif selon la revendication 1, **caractérisé en ce qu'**un couvercle (48) qui ferme le boîtier à ressort (45) est associé au boîtier à ressort (45), éventuellement à l'exception d'un alésage (7) pour un axe ou un arbre.

4. Dispositif selon la revendication 1, **caractérisé en ce que** le ressort spiral (46) est un ressort spiral en ruban métallique.

5. Dispositif selon la revendication 1, **caractérisé en ce que** le disque amortisseur (47) est constitué d'une matière plastique.

6. Dispositif selon la revendication 5, **caractérisé en ce que** la matière plastique du disque amortisseur est choisie parmi les matières plastiques suivantes : PET, polycarbonate, ABS.

7. Dispositif selon la revendication 5, **caractérisé en ce que** le disque amortisseur (47) présente une épaisseur comprise entre 0,5 mm et 0,02 mm, de préférence d'environ 0,2 mm.

8. Dispositif selon la revendication 5, **caractérisé en ce que** le disque amortisseur (47) a une forme circulaire.

9. Dispositif selon la revendication 5, **caractérisé en ce que** le diamètre du disque amortisseur (47) correspond à la largeur intérieure du boîtier à ressort (45).

10. Dispositif selon la revendication 1, **caractérisé en ce que** les dimensions des protubérances (73) sont plus petites que la valeur correspondant à la moitié du diamètre du disque amortisseur (47).

11. Dispositif selon la revendication 1, **caractérisé en ce que** la protubérance (73) a la forme d'une calotte sphérique.

12. Dispositif selon la revendication 1, **caractérisé en ce que** la protubérance s'étend radialement et présente la forme d'un segment de cylindre.

13. Dispositif selon la revendication 1, **caractérisé en ce que** la protubérance s'étend dans la direction périphérique du disque amortisseur (47).

14. Dispositif selon la revendication 1, **caractérisé en ce que** la protubérance présente une hauteur comprise entre 0,1 mm et 1 mm, de préférence de 0,8 mm.

15. Dispositif de store à enrouleur (14) destiné à des véhicules automobiles, comprenant une bande (15) pouvant être enroulée,
comprenant un axe d'enroulement (19) qui est monté avec possibilité de rotation et auquel la bande (15) enroulable est fixée par un bord,
et
comprenant un dispositif de moteur à ressort (22) selon la revendication 1, dans lequel
le ressort spiral (46) est accouplé du point de vue cinématique à l'axe d'enroulement (19), afin de mettre l'axe d'enroulement (19) sous précontrainte dans le sens de l'enroulement de la bande (15) sur l'axe d'enroulement (19), forme plusieurs couches de ressort et présente deux flancs latéraux.

16. Dispositif selon la revendication 15, **caractérisé en ce que** le dispositif de store à enrouleur (14) constitue un store de fenêtre.

17. Dispositif selon la revendication 15, **caractérisé en ce que** le dispositif de store à enrouleur (87) constitue un cache-bagages.

18. Dispositif selon la revendication 15, **caractérisé en ce que** le dispositif de store à enrouleur (88) est un dispositif de grille de séparation, la bande enroulable présentant une structure de type filet.

19. Dispositif selon la revendication 15, **caractérisé en ce que** le ressort spiral (46) est disposé à l'extérieur de l'axe d'enroulement (19).

20. Dispositif selon la revendication 15, **caractérisé en ce que** le ressort spiral (46) est disposé coaxialement avec l'axe d'enroulement (19).

21. Dispositif selon la revendication 15, **caractérisé en ce que** le ressort spiral (46) est disposé latéralement à côté de l'axe d'enroulement (19).

22. Dispositif selon la revendication 15, **caractérisé en ce que** le boîtier à ressort (45) en forme de pot est fixe.

23. Dispositif selon la revendication 15, **caractérisé en ce que** le boîtier à ressort (45) en forme de pot est accouplé de façon solidaire en rotation à l'axe d'enroulement (19).

24. Dispositif selon la revendication 15, **caractérisé en ce qu'**un couvercle (48) qui ferme le boîtier à ressort (45) est associé au boîtier à ressort (45), éventuellement à l'exception d'un alésage (71) pour un axe ou un arbre.

25. Dispositif selon la revendication 15, **caractérisé en ce que** le ressort spiral (46) est un ressort spiral en ruban métallique.

26. Dispositif selon la revendication 15, **caractérisé en ce que** le ressort spiral (46) présente une extrémité (60) située à l'extérieur, qui est pliée pour former une boucle.

27. Dispositif selon la revendication 15, **caractérisé en ce que** le ressort spiral (46) présente une extrémité (59) située à l'intérieur, qui est pliée à angle droit par rapport à la dernière spire de ressort, pour former une partie rectiligne, s'étendant dans le sens radial.

28. Dispositif selon la revendication 15, **caractérisé en ce que** le disque amortisseur (47) est constituée d'une matière plastique.

29. Dispositif selon la revendication 28, **caractérisé en ce que** la matière plastique du disque amortisseur (47) est choisie parmi les matières plastiques suivantes : PET, polycarbonate, ABS.

30. Dispositif selon la revendication 15, **caractérisé en ce que** le disque amortisseur (47) présente une épaisseur comprise entre 0,5 mm et 0,02 mm, de préférence d'environ 0,2 mm.

31. Dispositif selon la revendication 15, **caractérisé en ce que** le disque amortisseur (47) a une forme circulaire.

32. Dispositif selon la revendication 15, **caractérisé en ce que** le diamètre du disque amortisseur (47) correspond à la largeur intérieure du boîtier à ressort (45).

33. Dispositif selon la revendication 15, **caractérisé en ce que** les dimensions des protubérances (73) sont plus petites que la valeur correspondant à la moitié du diamètre du disque amortisseur (47).

34. Dispositif selon la revendication 15, **caractérisé en ce que** la protubérance (73) a la forme d'une calotte sphérique.

35. Dispositif selon la revendication 15, **caractérisé en ce que** la protubérance s'étend radialement et présente la forme d'un segment de cylindre.

36. Dispositif selon la revendication 15, **caractérisé en ce que** la protubérance s'étend dans la direction périphérique du disque amortisseur (47).

37. Dispositif selon la revendication 15, **caractérisé en ce que** la protubérance présente une hauteur comprise entre 0,1 mm et 1 mm, de préférence de 0,8 mm.
